Europäisches Patentamt

**(19)** European Patent Office

Office européen des brevets

**(11)** Publication number: **0 055 568**

**A1**

**(12)** # EUROPEAN PATENT APPLICATION

**(21)** Application number: **81305976.3**

**(22)** Date of filing: **21.12.81**

**(51)** Int. Cl.³: **G 11 B 5/58**
**G 11 B 21/10**
**//G11B5/55**

**(30)** Priority: **23.12.80 GB 8041323**

**(43)** Date of publication of application:
**07.07.82 Bulletin 82/27**

**(84)** Designated Contracting States:
**AT BE CH DE FR GB IT LI LU NL SE**

**(71)** Applicant: **Rodime Limited,**
**Nasmyth Road Southfield Industrial Estate**
**Glenrothes, Fife KY7 5QR Scotland(GB)**

**(72)** Inventor: **White, James Normal Jackson**
**11 Lomond Place**
**Kinross KY13 7BH Scotland(GB)**

**(72)** Inventor: **Caithness, Michael Gordon**
**13 Crammond Place**
**Dalgetty Bay, Fife KY11 5LF Scotland(GB)**

**(74)** Representative: **Wotherspoon, Graham et al,**
**FITZPATRICKS 48 St. Vincent Street**
**Glasgow G2 5TT(GB)**

**(54) Read-write head thermal compensation system.**

**(57)** A thermal compensation system for positioning a read-write head (12) relative to computer disk surface (6) is a mechanical arrangement and uses different materials with different coefficients of thermal expansion. The interconnection of the different materials provides a primary thermal circuit and a compensating thermal circuit, in two separate chambers (3, 4) which have a steel shaft (10) and circulating air in common. In response to a change in temperature the chambers (3, 4) thermally equalise; a misposition of the read/write head (12) in the primary circuit is compensated by the compensation circuit which causes the shaft (10) to rotate to retain the read/write head (12) at its original position relative to the disk surface (6). The principal materials used in the thermal circuits are aluminium and stainless steel. The position of the shaft (10) and arm (9) can be adjusted with respect to a line through the hub (5) and shaft (10) to optimise compensation over the track positions and the temperature range of the disk drive.

Fig.3.

Croydon Printing Company Ltd.

"Read-Write Head Thermal Compensation System".

The present invention relates to a thermal compensation mechanism for positioning a read-write head on a computer disc when used in a disc drive device.

Conventionally, the principal parts of the mechanism used for positioning the read-write head over the disc surface, that is the base plate, the head arm, the disc mounting hub and the disc itself are made from aluminium. The read-write head is mounted on a flexible foil, called the flexure, which is made of stainless steel and provides desirable mechanical properties during use. However, as the coefficients of thermal expansion are different for aluminium and stainless steel, the differential rate of expansion or contraction between the stainless steel components, particularly the flexure, and the aluminium components in response to temperature variations results in misalignment between the read-write head and magnetic data tracks on the disc surface and this leads to deterioration in drive performance.

There are known in the art several techniques which compensate for movements between the surface of the disc and the read-write head due to thermal effects. Such known compensation techniques require to have space on the disc surface, either in data blocks, in whole tracks or even one complete side of a disc, dedicated to storing positional information in order to enable compensation of thermal effects to be achieved.

In general, the method used depends on several factors including in particular the density of tracks required on the disc. In all cases a d.c. servo-mechanism is required, including a positioning motor and associated control circuitry, and depending on the compensation method chosen this can be both complex and expensive. Nevertheless, for high track density, that is greater than 300 tracks per inch, such techniques are necessary. However, for lower track densities it is feasible to eliminate such a discrete servomechanism and hence the disadvantages of cost, components, reliability and disc surface area loss.

An object of the present invention is to obviate or mitigate the abovesaid disadvantages.

According to a first aspect of the present invention there is provided a thermal compensation mechanism for a transducer system comprising a first arm formed of a first material, said first arm carrying a first elongate portion formed of a second material, said first elongate portion having transducing means positioned for tracking across a surface, said first and second materials having different coefficients of thermal expansion, said first arm fixed to a shaft formed of said second material, said shaft being mounted in a housing formed of said second material, said housing being located in a base plate formed of said second material, drive means for moving said first arm and said elongate portion relative to the surface, said drive means being connected to the said shaft via a second arm formed of said second material, the arrangement being such that in response to a change in temperature the first and second materials move in such a way that the said second arm effectively rotates the first arm via the shaft to maintain the transducing means substantially at its original track position.

Preferably, the mechanism is for use with a computer disc drive system, and the surface is one face of a computer disc.

Preferably also, said first material is aluminium and said second material is stainless steel.

Further, according to a second aspect of the present invention, there is provided a first chamber containing the first arm, the first elongate portion and the transducing element and a second chamber containing the second arm, band means, spring means and pulley means, said first and second chambers being connected to allow air from the first chamber to circulate through said second chamber thereby equalising the thermal environments of the two chambers and the parts contained therein, this air returning to the first chamber via filtering means to remove contaminants harmful to the performance of the disc drive.

An embodiment of the present invention will now be described by way of example with reference to the accompanying drawings in which:-

Fig. 1 is a top plan view of part of the apparatus according to the present invention;

Fig. 2 is a bottom plan of Fig. 1 showing another part of the apparatus according to the present invention; and

Fig. 3 is a schematic view of Figs. 1 and 2 taken in the direction A - A and B - B respectively.

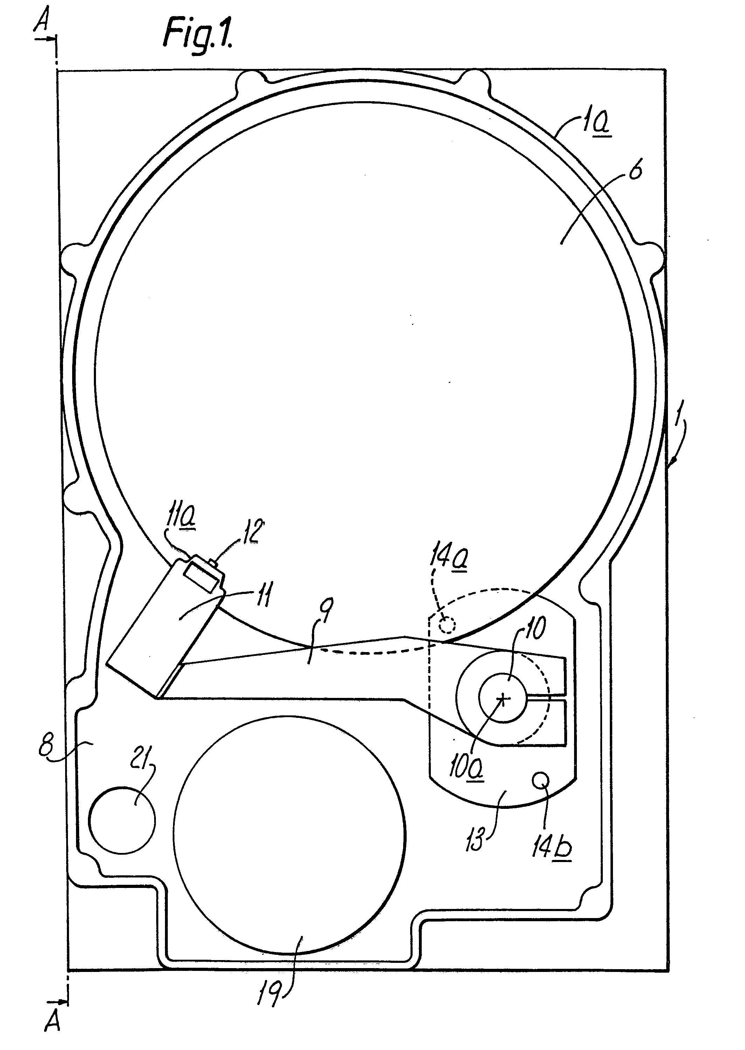

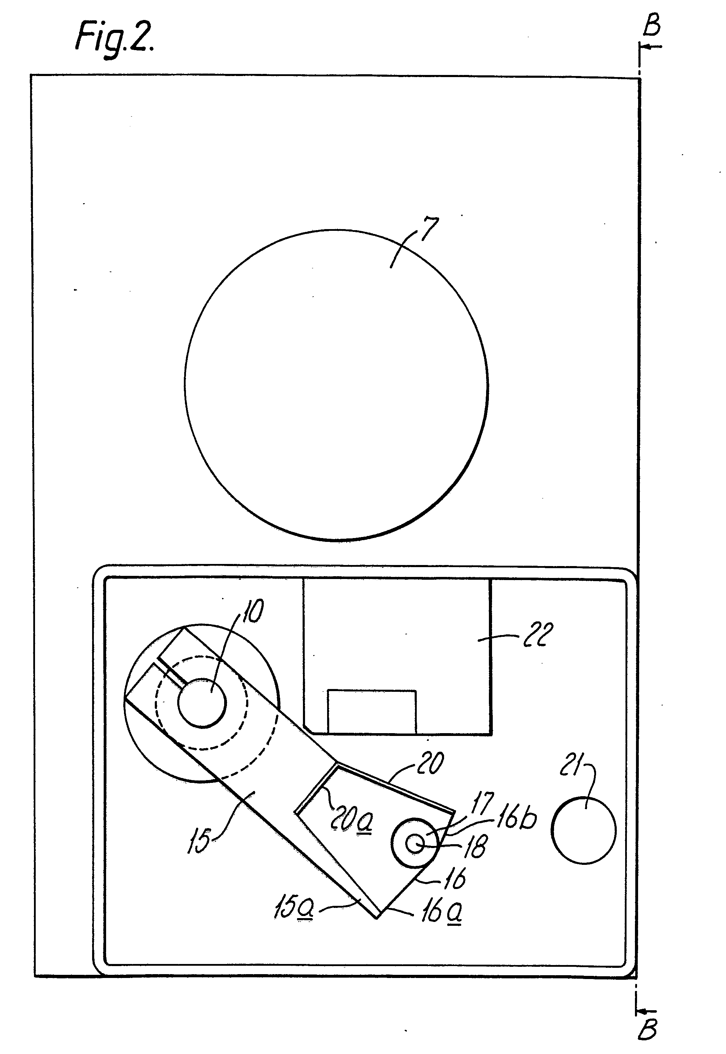

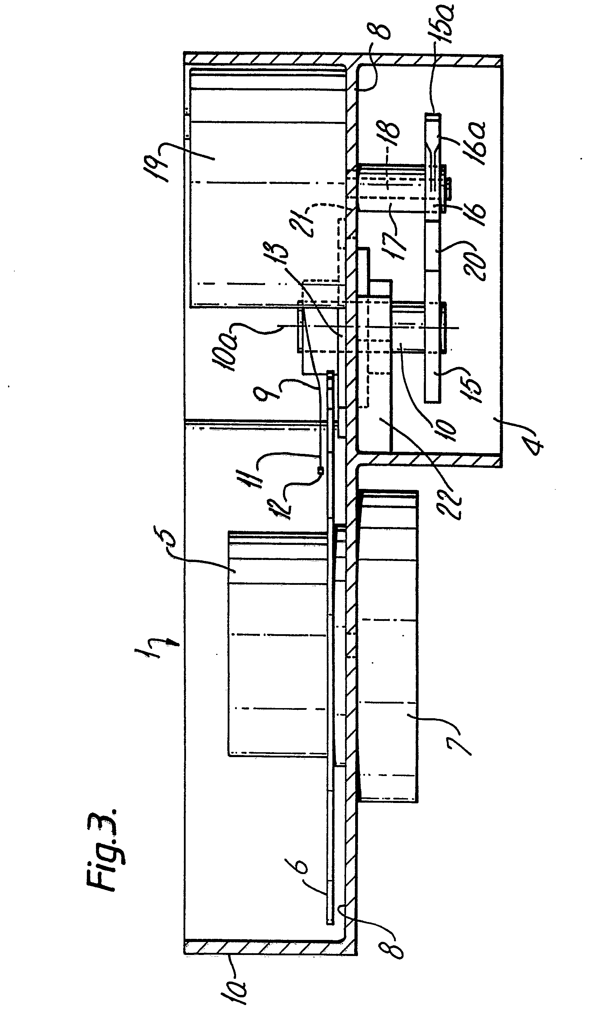

Referring now to the drawings, a computer disc drive assembly 1 comprises a housing 1a which contains two chambers 3, 4 (Fig. 3). The chamber 4 contains a hub assembly 5 on which computer discs 6 are mounted (Figs. 1, 3) (one disc is shown mounted in the interest of clarity). The hub is driven by a motor 7 fixed to the base plate 8 of the housing 1a. The chamber 3 also contains an aluminium arm 9 mounted on a steel shaft 10. This arm is rotatable about the axis 10a of the shaft 10. Connected to the other end of the arm 9 is a thin rectangular stainless steel foil called a flexure 11. A read-write transducer or magnetic head 12 is fixed to the other end 11a of the flexure 11. The steel shaft 10 is fixed to a pair of preloaded steel ball bearings (not shown) which in turn are housed in a steel case 13 fixed to the base plate 8 and located therein by dowel pins 14a and 14b. The shaft 10 passes through from chamber 3 into chamber 4 and is connected therein to another arm 15 made of stainless steel (Figs. 2, 3). At point 15a of arm 15 there is connected one end 16a of an appropriately shaped stainless steel band 16 which is wound around a steel pulley 17, attached to shaft 18 of a stepper motor 19. The other end 16b of steel band 16 is connected to a steel spring 20, of which a portion 20a is connected to the arm 15. The stepper motor 19 is fixed to the base plate 8.

In addition, there is provided an opening 21 between chambers 3 and 4 through which air, driven by centrifugal force due to the rotation of the disc 6, passes from chamber 3 to chamber 4. The air pressurises chamber 4 and is returned to chamber 3 via a filter 22 which removes contaminants, such as wear particles from the band 16 moving in contact with pulley 17. The filter 22 is positioned in chamber 4 opposite a low pressure area in chamber 3 in order to maximise the pressure drop across the filter 22 and thus facilitate flow and circulation of the air back into chamber 3.

Thus, there are two thermal "circuits" effectively controlling the positioning of the read-write head 12 to a track on the disc 6 consisting of a 'primary' thermal circuit and a 'compensating' thermal circuit. The 'primary' thermal circuit operates in chamber 3 and links the track on the disc 6 to the hub 5, to the motor 7, to the base plate 8, to the bearing housing 14, to the bearings 13, to the shaft 10, to the arm 9, to the flexure 11, and to the read-write head 12. The compensating circuit operates in chamber 4 and links the shaft 10 to the arm 15, to the spring 20 and the band 16, to the pulley 17, to the stepper motor shaft 18, to the stepper motor 19, to the base plate 8, to the bearing housing 14, to the bearings 13, and back to the shaft 10.

The primary circuit and the compensating circuit have only steel shaft 10 and circulating air in common.

In use, whenever there is a temperature change both chambers 3 and 4 thermally equalise. The primary circuit of chamber 3 results in a misposition of head 12 on disc 6. However the compensating circuit of the chamber 4 causes the shaft 10 to rotate in such a direction by an amount necessary to move the read-write head 12 to its original position relative to the disc. This operation is described more fully as follows:-

The 'primary' circuit in chamber 3 causes the read-write head 12 to move relative to the disc 6 mainly because of the contribution of steel in flexure 11 to the thermal loop. This amount of misposition may be reduced somewhat by correct position of dowel pins 14a and 14b, in steel housing 13, in the line between shaft 10 position and hub 5 position. This provides a contribution to the loop movement which tends to cancel the relative movement between the head and the disc. The resulting misposition varies according to track position (angle of shaft 10 and arm 9 relative to the 'line' drawn between the centre of the hub and the shaft axis 10a) but it is still too large for reliable operation of the disc drive.

The 'compensating' circuit in chamber 4 acts to reduce this misposition to negligible proportions for all track positions. It should be noted that the compensating circuit consists totally of stainless steel apart from aluminium in the stepper motor flange and on the base plate 8 between the stepper motor and the dowel pins 14a and 14b. With temperature changes this aluminium part of the compensating circuit varies in length relative to the steel parts and the change in geometry causes rotation of the arm 15 about the axis of the shaft against the expansion of the spring 20. The amount of this rotation may be controlled by suitable positioning of dowel pins 14a and 14b and an optimum position is chosen to compensate for the read-write head and disc 6 misposition over the prescribed track positions and temperature range of the disc drive.

Further modifications may be made to the embodiment described without affecting the scope of the invention. For example, any other material having suitable mechanical and magnetic properties could be used instead of stainless steel; and the aperture between the chambers and the filter could be positioned at any other location convenient with air flow and circulation requirements.

Additionally, the solution provided by this invention is applicable to providing both temperature and humidity compensation for floppy disc drive computer systems: a hygroscopic material, for example a polymer, could be used instead of stainless steel. This, in the situation where a common thermal and humid environment is provided, compensation of errors due to changes in these parameters would be provided in the same manner by the present invention.

Advantages of this invention include: there is no requirement for d.c. servomechanisms nor sophisticated signal processing associated with sampling techniques thus raw material and manufacturing costs are reduced. The position of the read-write head is continuously being automatically adjusted by the thermal compensation mechanism inherent in the mechanical design of the device.

CLAIMS

1.    A thermal compensation mechanism for a transducer system comprising a first arm (9) formed of a first material, said first arm carrying a first elongate portion (11) formed of a second material, said first elongate portion having transducing means (12) positioned for tracking across a surface (6), said first and second materials having different coefficients of thermal expansion, said first arm fixed to a shaft (10) formed of said second material, said shaft being mounted in a housing (1a) formed of said second material, said housing being located in a base plate (8) formed of said second material, drive means (19) for moving said first arm (9) and said elongate portion (11) relative to the surface (6), said drive means being connected to the said shaft (10) via a second arm (15) formed of said second material, the arrangement being such that in response to a change in temperature the first and second materials move in such a way that the said second arm (15) effectively rotates the first arm (9) via the shaft (10) to maintain the transducing means (12) substantially at its original track position.

2.    A thermal compensation mechanism as claimed in claim 1 wherein the mechanism is combined with a computer disc drive unit (1).

3.    A thermal compensation mechanism as claimed in claim 1 or claim 2 wherein the surface (6) is one face of a computer disc.

4.    A thermal compensation mechanism as claimed in any preceding claim wherein the first material is aluminium and the second material is stainless steel.

5.    A thermal compensation mechanism as claimed in any one of claims 2-5 wherein the disc drive unit (1) has a first chamber (3) containing the first arm
(9), the first elongate portion (11) and the
transducing element (12) and a second chamber (4)
containing the second arm (15), band means (16),
spring means (20) and pulley means (17), said first
and second chambers (3,4) being connected by an
opening (21) to allow air from the first chamber (3)
to circulate through said second chamber (4) thereby
equalising the thermal environments of the two chambers
and the parts contained therein, this air returning
to the first chamber (3) via filtering means (22)
to remove contaminants harmful to the performance of
the disc drive (1).

Fig.1.

0055568

1/3

Fig.2.

Fig.3.

0055568

European Patent
Office

**EUROPEAN SEARCH REPORT**

## DOCUMENTS CONSIDERED TO BE RELEVANT

CLASSIFICATION OF THE
APPLICATION (Int. Cl. 3)

| Category | Citation of document with indication, where appropriate, of relevant passages | Relevant to claim |
|---|---|---|
| P | PATENTS ABSTRACTS OF JAPAN, vol. 5, no. 60, April 23, 1981, page 35 P 58 <br><br> & JP - A - 56 11663 (NIPPON DENKI) <br><br> * Abstract * | 1,2,5 |
|  | -- |  |
| A | PATENTS ABSTRACTS OF JAPAN, vol. 1, no. 50, May 16, 1977, page 3251 E 76 <br><br> & JP - A - 51 146207 (HITACHI SEISAKUSHO) <br><br> * Abstract * | 1 |
|  | -- |  |
| A | PATENTS ABSTRACTS OF JAPAN, vol. 1, no. 76, July 21, 1977, page 1036 E 77 <br><br> & JP - A - 52 11912 (HITACHI SEISAKUSHO) <br><br> * Abstract * | 1 |
|  | -- |  |
| A | PATENTS ABSTRACTS OF JAPAN, vol. 1, no. 95, August 29, 1977, page 2809 E 77 <br><br> & JP - A - 52 30406 (HITACHI SEISAKUSHO) <br><br> * Abstract * | 1 |
|  | -- |  |
| A | PATENTS ABSTRACTS OF JAPAN, vol. 3, no. 135, November 10, 1979, page 124 E 150 <br><br> & JP - A - 54 113312 (FUJITSU) <br><br> * Abstract * | 1 |
|  | -- ./. |  |

G 11 B 5/58
21/10 //
5/55

TECHNICAL FIELDS
SEARCHED (Int.Cl. 3)

G 11 B 5
G 11 B 21

CATEGORY OF
CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family,
corresponding document

X | The present search report has been drawn up for all claims

| Place of search | Date of completion of the search | Examiner |
|---|---|---|
| The Hague | 18-03-1982 | CARTRYSSE |

EPO Form 1503.1 06.78

**European Patent Office**

## EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | US - A - 3 723 980 (GABOR)<br><br>-- | 1 | |
| A | XEROX DISCLOSURE JOURNAL, vol. 5, no. 5, September/October 1980, Stamford/Connecticut, US<br>ANDERSON et al.: "Thermal Servo System for Mechanical Positioning"<br>page 549<br><br>-- | 1 | |
| A | GB - A - 792 729 (ENGLISH ELECTRIC COMPANY) | 1 | TECHNICAL FIELDS SEARCHED (Int. Cl.³) |
| A | US - A - 4 185 310 (KASETA et al.)<br><br>---- | 1 | |

EPO Form 1503.2  06.78